# EUROPEAN PATENT APPLICATION

(11) **EP 4 685 632 A1**
(43) Date of publication of application: **28.01.2026**
(21) Application number: 25191259.8
(22) Date of filing: 23.07.2025
(51) Int. Cl.: G06F 8/71, G06Q 10/10, G06T 11/20, G06T 17/00, G06T 19/00, G06F 16/23, G06F 16/18

(54) **IMPROVED VERSION CONTROL AND RENDERING FOR BINARY ASSETS**

(30) Priority: 24.07.2024 US 202418783254
(71) Applicant: Unity Technologies SF, San Francisco, CA 94105 (US)
(72) Inventor: KEARNEY, Gregory Lewis, San Francisco, 94103 (US); ODESANYA, Busayo Kehinde, Montréal, H3K 1G6 (CA); VICTOR, Rômulo Barroso, Montréal, H3K 1G6 (CA); FADAEE, SeyedMahdi, Montréal, H3K 1G6 (CA); AHRENS, Mathias Georges Hermann, Montréal, H3K 1G6 (CA); LUCIO DALLO, Manuel, 1153 Copenhagen (DK); RUIZ ARROYO, Borja, 1153 Copenhagen (DK); GÓMEZ SAN MARTÍN, Míryam, 1153 Copenhagen (DK); DE ALBA DE ANDRÉS, Rubén, 1153 Copenhagen (DK)
(74) Representative: Murgitroyd & Company

(57) **Abstract**

A method of creating, modifying, and rendering a binary asset is disclosed. A first workspace for a first binary asset can be generated. A first version of the first binary asset can be saved on the first workspace. A modification to the first binary asset can be received. A second version of the first binary asset with the modification can be saved on the first workspace. The first version of the first binary asset and the second version of the first binary asset can be rendered based on a selected platform. The second version of the first binary asset can be saved to a repository. The first workspace can be deleted.

## Description

### TECHNICAL FIELD

The subject matter disclosed herein generally relates to the technical field of computer systems and graphics, and in one specific example, to computer-readable storage media, computer systems and methods for improved creation, modification, and rendering of binary assets.

### BACKGROUND

In the field of computer graphics, artists often collaborate to create and modify binary assets (e.g., 3D graphic content). However, such collaboration faces various technological challenges. For example, binary files generally lack the clear line-by-line structure that text files may have, which makes comparing binary files technologically challenging. Because comparing binary files is technologically challenging, diffing binary files and merging binary files are typically not performed during collaboration. Therefore, collaboration to create and modify a large binary asset may result in several work in progress versions with each version requiring large amounts of storage. Using such large amounts of storage can be expensive and inefficient.

Additionally, when artists collaborate to create and modify binary assets, the artists may use a variety of tools (e.g., Maya, Blender, Substance, Photoshop) for assets that may be rendered on a variety of platforms (e.g., web, mobile, Windows, macOS, console, webGL), which results in various technological challenges. For example, because of the variety of tools and the variety of platforms, an asset that appears complete on one platform may appear incomplete or broken on another platform. An artist may, for example, share what the artist believes to be a complete asset with other artists with whom the artist is collaborating. However, the asset may appear broken or incomplete to some of the other artists who are using different tools. This difference between what the artists see causes delay and confusion, which hurts the efficiency of the collaboration.

### SUMMARY

The invention is a computer-readable storage medium, system and method as defined in the appended claims.

### BRIEF DESCRIPTION OF THE DRAWINGS

Features and advantages of example embodiments of the present disclosure will become apparent from the following detailed description, taken in combination with the appended drawings, in which:
Fig. 1A is a diagram of an example system for creation, modification, and rendering of binary assets, in accordance with one or more example embodiments;
Fig. 1B is a diagram of an example system for creation, modification, and rendering of binary assets using various tools, in accordance with one or more example embodiments;
Fig. 2 is a flow chart of example operations, in accordance with one or more example embodiments;
Fig. 3A is a flow chart of example operations, in accordance with one or more example embodiments;
Fig. 3B is a flow chart of example operations, in accordance with one or more example embodiments;
Fig. 4 is a block diagram illustrating an example software architecture, which may be used in conjunction with various hardware architectures described herein, in accordance with one or more example embodiments; and
Fig. 5 is a block diagram illustrating components of a machine, according to some example embodiments, configured to read instructions from a machine-readable medium (e.g., a machine-readable storage medium) and perform any one or more of the methodologies discussed herein, in accordance with one or more example embodiments.

### DETAILED DESCRIPTION

The description that follows describes example systems, methods, techniques, instruction sequences, and computing machine program products that comprise illustrative embodiments of the disclosure, individually or in combination. In the following description, for the purposes of explanation, numerous specific details are set forth in order to provide an understanding of various embodiments of the disclosed subject matter. It will be evident, however, to those skilled in the art, that various embodiments of the disclosed subject matter may be practiced without these specific details.

The present disclosure provides for technological improvements that address technological challenges arising in the field of computer graphics. As described in the background, current approaches to collaboration for binary assets (e.g., textures, images, meshes, animations, audio, project scenes, rigging, shaders) face various technological challenges. These technological challenges include excessive and inefficient use of storage arising from maintaining several versions of large binary assets as well as inconsistent and inefficient collaboration arising from using different tools and platforms. These technological challenges are exacerbated as collaborative projects grow increasingly complex and involve more artists because the use of storage and the use of different tools grow as well. The present disclosure addresses these and other technological challenges with systems, methods, and computer-readable media that facilitate a workflow for efficiently creating, modifying, and rendering binary assets.

Systems, methods, and computer-readable media for efficiently creating, modifying, and rendering binary assets are disclosed. A workspace for creation and modification of an asset can be generated. The workspace can be separate from a central repository where completed assets for a project can be stored. Access to the workspace can be limited to users (e.g., artists, producers, freelancers, outsources) working on creating the asset, modifying the asset, and reviewing the asset. In some instances, different users can have different levels of access, providing additional security and reducing data travel. As different versions of the asset are generated throughout the creation and modification of the asset, the different versions can be stored in the workspace. The asset can be rendered using a central build automation based on selected or predetermined tools and platforms as well as the completed assets in the central repository. Using the central build automation, a build that demonstrates the asset in the context of the completed assets on a selected platform can be generated and tested. Here, building the asset in context can be advantageous by facilitating timely testing of the asset, which accelerates feedback, reduces risk of broken builds, shortens development time, and facilitates efficient use of time and improved quality control. Once the asset is complete, the asset can be stored in the central repository where it can be accessed by other users (e.g., other artists, other producers) involved in the project. The workspace, and the different versions stored in the workspace, can be deleted to free storage space.

The present disclosure includes apparatuses which perform one or more operations or one or more combinations of operations described herein, including data processing systems which perform these methods and computer readable media which when executed on data processing systems cause the systems to perform these methods, the operations or combinations of operations including non-routine or unconventional operations.

As an example of the present disclosure, an artist and a producer can be tasked with generating a texture asset for a 3D spaceship. In this example, a workspace can be generated for the purpose of generating the texture asset. As the artist and the producer create and modify the texture asset, different versions of the texture asset can be generated and stored in the workspace. The producer can review this work-in-progress texture asset using a central build automation that builds a 3D spaceship using the work-in-progress texture asset stored in the workspace with complete assets for the 3D spaceship. For example, the central build automation can build a full 3D spaceship using the work-in-progress texture asset stored in the workspace with other files that are stored in a main game repository associated with the 3D spaceship, including the scripts, the 3D mesh, the rigging, and other game object components which, when combined with the work-in-progress texture asset, makes the full 3D spaceship. Once the producer has confirmed the texture asset is complete, a complete texture asset can be stored in a central repository for the 3D spaceship along with the other complete assets. At this point, the workspace generated for the texture asset, and the different versions of the texture asset stored therein, can be deleted.

The systems, methods, and computer-readable media described herein include one or more components or operations that are non-routine or unconventional individually or when combined with one or more additional components or operations because, as illustrated in the above example, the present disclosure addresses several technological challenges in the field of computer graphics. For example, the present disclosure describes systems, methods, and non-transitory computer-readable media that improve overall storage efficiency by generating a temporary workspace that is deleted when an asset stored therein is complete. Furthermore, storage efficiency is improved because the workspace is separate from a central repository, thereby reducing the number of different versions of a project stored in the central repository. This also improves the consistency and stability of the project stored in the central repository as the different versions of the project use complete assets instead of incomplete assets, such as those stored in the workspace while the asset is being modified.

Additionally, by generating a build using the central build automation, the methods, systems, and non-transitory computer-readable media of the present disclosure address technological challenges arising from use of different tools and platforms in the field of computer graphics. For example, an asset stored in a temporary workspace can be rendered along with completed assets in a central repository to generate a build that is representative of how the asset would look in a complete project. Furthermore, the central build automation can render the asset using a selected or predetermined renderer on a selected or predetermined platform to produce consistent and accurate results. The central build automation also facilitates previewing the asset on various platforms to improve compatibility. With these functionalities, the methods, systems, and non-transitory computer-readable media of the present disclosure further improve efficient use of storage space by facilitating improved quality of assets stored in the central repository.

In addition to the advantages described above, the methods, systems, and non-transitory computer-readable media of the present disclosure provide functionalities to support an improved workflow for efficiently creating, modifying, and rendering binary assets. For example, as further described below, the methods, systems, and non-transitory computer-readable media of the present disclosure seamlessly provide access to a workspace without additional user configuration. Additionally, the methods, systems, and non-transitory computer-readable media of the present disclosure provide for objective monitoring of the overall progress of a project by identifying which assets of the project are currently being worked on in workspaces.

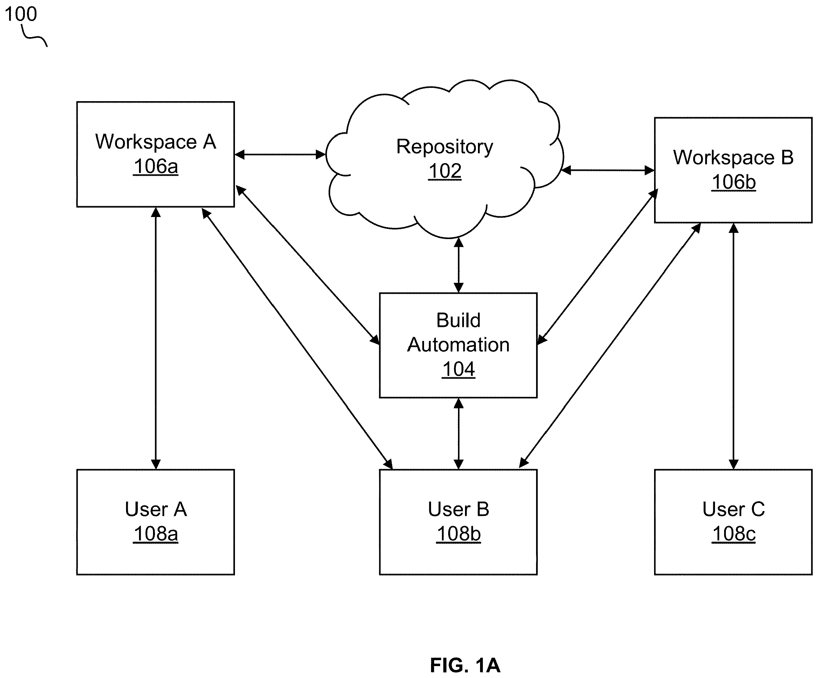

Turning now to the drawings, systems, methods, and non-transitory computer-readable media including non-routine or unconventional components or operations, or combinations of such components or operations, for efficiently creating, modifying, reviewing, and rendering binary assets (e.g., textures, images, meshes, animations, audio, project scenes, rigging, shaders) in accordance with embodiments of the invention are illustrated. Accordingly, Fig. 1A is a diagram of an example system 100 configured to facilitate creation, modification, rendering, reviewing, and approving of binary assets for users 108a, 108b, 108c using a repository 102, a build automation 104, and workspaces 106a, 106b. In this example, user A 108a and user C 108c can be artists who create and modify assets, and user B 108b can be a producer who reviews the assets created and modified by user A 108a and user C 108c. The various components and operations described with respect to Fig. 1A are non-limiting examples and many variations are possible. For example, a system consistent with the present disclosure can include more or fewer repositories, build automations, workspaces, and users.

In example embodiments, a repository, such as repository 102, can be configured as a centralized storage location for a project, including assets (e.g., 2D textures, 3D meshes, object files, animation files) of the project. For example, repository 102 can facilitate version control by tracking changes to the project over time. Changes to the project, such as creation and modification of the assets for the project, can be committed to the repository 102. The changes can be recorded as a history of modifications to the project, for example, as metadata. With the history of modifications, the project can be reverted to previous versions, for example, to undo a modification. Various versions of the asset resulting from the modifications to the asset can be reviewed in a side-by-side comparison. The project can also be restored to a current version, for example, to redo a modification.

A repository, such as repository 102, can facilitate collaboration by multiple users, such as the users 108a, 108b, 108c, by providing access to the assets of the project and recording the changes made to the assets. For example, repository 102 can facilitate a pull request by which a user can request access to an asset for modification. Repository 102 can facilitate a push request by which the user can request the modification for the asset to be integrated with the other assets for the project.

When an asset is pulled by a user, the asset stored in repository 102 can be locked to prevent modification by other users until the asset is pushed back to the repository 102. While the asset is locked, the other users can access (e.g., read) a locked version of the asset but are prevented from modifying the asset. In some instances, a notification can be displayed in association with the asset. In some instances, notifications can be provided to the other users to indicate the asset is locked. Locking assets can prevent conflicting versions of the asset being stored in the repository 102, which can be particularly advantageous for binary assets because of technological challenges with respect to diffing and merging binary assets.

While the example system 100 of Fig. 1A illustrates repository 102 as a centralized repository, the present disclosure is not limited to a centralized repository. In some embodiments, the present disclosure provides for a distributed repository utilizing a distributed version control system in which each user of the system has a complete repository and associated history.

In example embodiments, workspaces, such as workspaces 106a, 106b, can be configured as temporary and separate storage locations for assets of a project. For example, workspace A 106a can be generated in response to a request to create or modify an asset of a project stored in repository 102. In some instances, the request to create or to modify the asset can be a pull request by a user, such as user A 108a. In some instances, the request to create or to modify the asset can be an assignment by a user, such as user B 108b. In some instances, a request to create or to modify an asset can be made, and subsequently a user can be invited to perform the creation or the modification of the asset.

Upon generation of a workspace, a user can be provided with access to the workspace. For example, creation of an asset can be assigned to user A 108a by user B 108b. Workspace A 106a can be generated for creation and modification of the asset, and user A 108a can be provided access to workspace A 106a. Providing user A 108a with access to workspace A 106a can include mapping workspace A 106a to local storage (e.g., local drive, local disk) of user A 108a. By mapping workspace A 106a to the local storage, workspace A 106a can appear to user A 108a as a folder on a user device (e.g., computing device) of user A 108a. User A 108a can access, create, and modify files in the folder using various tools (e.g., Maya, Blender, Substance, Photoshop). The user device can support a variety of platforms (e.g., web, mobile, Windows, macOS, console, webGL). Different users can have different levels of access. For example, user A 108a may be a freelancer or an outsourcer who is tasked with creation of the asset but is to be denied access to other assets of the project in repository 102. This restricts user A 108a to working on the asset while providing security for the other assets of the project in repository 102. As another example, user A 108a may be an artist for the project in repository 102 and can be provided with broader access.

A workspace can be presented to a user as part of a virtual file system that includes assets on the workspace and assets on a repository. For example, assets stored on workspace A 106a and repository 102 can be presented to user A 108a as a virtual file system that appears, for example, as a system of folders on the user device of user A 108a. The virtual file system can be organized based on metadata associated with workspace A 106a and repository 102 that provides the file structure of the assets stored on workspace A 106a and repository 102. In response to a request to access an asset through the virtual file system, the requested asset can be downloaded to the user device of user A 108a.

Workspace A 106a can be automatically synchronized with the local storage of user A 108a. Automatically synchronizing workspace A 106a with the local storage of user A 108a can include maintaining a history of changes made to the local storage of user A 108a and updating workspace A 106a based on the changes made to the local storage of user A 108a. Workspace A 106a can be updated to store what is currently stored on the local storage of user A 108a. Workspace A 106a can store previous versions of what is stored on the local storage of user A 108a. With the history of changes made to the local storage of user A 108a, workspace A 106a can be reverted to previous versions or restored to a current version, with such changes to workspace A 106a being applied to the local storage of user A 108a. For example, an asset created by user A 108a on a local storage of user A 108a. A copy of the asset can be created on workspace A 106a and automatically synchronized with the asset on the local storage of user A 108a. As user A 108a modifies the asset on the local storage of user A 108a, a history of changes made by user A 108a to the asset and copies of the asset reflective of the changes made by user A 108a can be stored on workspace A 106a. Using the history of changes, the asset can, for example, be reverted from a current version to a previous version to undo changes made by user A 108a. The previous version of the asset on workspace A 106a can be copied to the local storage of user A 108a, maintaining synchronization between the asset on the local storage of user A 108a and the copy of the asset on workspace A 106a.

In example embodiments, a user can be invited to access a workspace. For example, user B 108b can invite an additional user in addition to user A 108a to collaborate on assets stored on workspace A 106a. A notification (e.g., email) can be generated and provided to the additional user. Upon joining workspace A 106a, local storage of the additional user can be mapped to workspace A 106a such that changes made to assets stored on workspace A 106a by any user with access to workspace A 106a is synchronized across the local storage of the additional user and the local storage of user A 108a.

In example embodiments, a workspace generated for creation and modification of an asset can be separate from a repository such that different versions of the asset are stored on the workspace and not on the repository. For example, as illustrated in Fig. 1A, workspace A 106a is separate from repository 102. While user A 108a modifies the asset stored on workspace A 106a, a history of modifications to the asset can be maintained on workspace A 106a, for example, as metadata. Different versions of the asset corresponding to the history of modifications to the asset can be stored on workspace A 106a. For users who do not have access to workspace A 106a, such as user C 108c, the different versions of the asset are not accessible. For example, user C 108c can access a version of the asset that is stored on repository 102. In some instances, the asset can appear to be unavailable until a complete version of the asset is stored on repository 102. Likewise, user C 108c can create and modify a different asset on workspace B 106b. User A 108a can access and modify the asset on workspace A 106a but cannot access the different asset on workspace B 106b. As illustrated in this example, users are prevented from accessing other incomplete assets besides the incomplete assets they are modifying, avoiding potential confusion caused by the other incomplete assets.

In example embodiments, a notification (e.g., email) can be generated and provided in response to a change to an asset in a workspace. For example, in response to user A 108a making a change to the asset in workspace A 106a, a notification can be generated and provided to user B 108b. In this example, the notification can indicate to user B 108b that a change to the asset in workspace A 106a has been made and to review the change.

In example embodiments, changes to an asset can be reviewed, rejected, and confirmed. Comments can be provided with respect to the changes to the asset. For example, user B 108b can review a change to the asset in workspace A 106a made by user A 108a. The change can be reviewed, for example, through a web interface associated with workspace A 106a. For example, a current version of the asset can be viewed through the web interface with previous versions of the asset (e.g., in a side-by-side comparison) to illustrate changes between the current version of the asset and the previous versions of the asset. Based on the review of the change, user B 108b can reject the asset as incomplete or confirm the asset as complete. For example, user B 108b can reject the asset as incomplete and provide comments through the web interface for additional changes to be made to the asset. A notification can be generated for user A 108a based on the rejection and the comments. User A 108a can make additional changes to the asset based on the comments, which can cause additional notifications to be generated and provided for user B 108b and additional review by user B 108b. In some instances, such as when a user is unavailable to review an asset, the asset can be saved to the repository 102 without review.

As another example, user B 108b can confirm the asset as complete through the web interface. Based on the confirmation, a current version of the asset can be stored on repository 102 as a complete version of the asset. Upon confirmation of the asset as complete, workspace A 106a, and the different versions of the asset stored therein, can be deleted. As illustrated in this example, use of storage is improved by using separate workspaces for creation and modification of assets. Furthermore, because the assets are not moved from a workspace to a repository until the assets are complete, storage on the repository is more efficient. Additionally, because other users do not have access to incomplete assets stored on the separate workspaces, the likelihood of confusion and broken builds caused by incomplete assets is reduced. For example, because temporary assets that may break a build, causing loss of time, are prevented from being uploaded to the repository, project stability is improved, and an additional layer of security and review is provided.

In example embodiments, build automation, such as build automation 104, provides various tools to support review, rejection, and confirmation of assets. For example, build automation 104 can generate a build based on an asset using a selected or predetermined renderer for a selected or predetermined platform. The build can demonstrate the asset as it would appear using the selected or predetermined renderer on the selected or predetermined platform, allowing a user, such as user B 108b, to preview the asset before it is committed to repository 102. In some instances, build automation 104 can generate a build based on an asset in a workspace, such as workspace A 106a, and complete assets in a repository, such as repository 102, to demonstrate the asset as it would appear with the complete assets, which offers context for the preview of the asset. In some instances, build automation 104 can generate a first build based on a current version of an asset in a workspace and a second build based on a previous version of the asset in the workspace, facilitating comparison between the first build and the second build to compare the current version of the asset with the previous version of the asset. As illustrated in this example, build automation allows for an asset to be previewed in the context of other assets in a repository without the asset being committed to the repository.

While the above example illustrated the use of build automation by a user to review an asset created and modified by another user, build automation can be utilized by any user, such as the user who created and modified the asset. For example, user A 108a can use a local tool (e.g., Maya, Blender, Substance, Photoshop) on, for example, a Windows PC for creation and generation of an asset that is stored on workspace A 106a. User A 108a can use build automation 104 to generate a build of the asset that demonstrates how the asset looks on a selected platform (e.g., web, mobile, Windows, macOS, console, webGL). With the generated build, user A 108a can preview the asset on the selected platform despite using a Windows PC. User A 108a can preview the asset generated by build automation 104 via, for example, a web interface.

Various use cases are supported by the example embodiments described herein. For example, a binary asset can be rendered for a web interface for review. The binary asset can be reviewed through the web interface and checked into a repository upon approval of the binary asset. As another example, previews of different versions of a binary asset can be generated for review. The previews can be provided, for example, in a side-by-side comparison for review. Upon approval of the binary asset, the binary asset can be checked into a repository. As another example, a binary asset can be rendered for a target platform (e.g., web, mobile, Windows, macOS, console, webGL) with project code and other binary assets stored in a repository. The resulting build can be reviewed and, upon approval of the build, the binary asset can be checked into the repository.

In example embodiments, a complete asset stored in a repository from a workspace can be provided as an update to users with access to the repository. For example, user B 108b can confirm an asset in workspace A 106a is a complete asset. The complete asset can be pushed to repository 102 based on the confirmation. In this example, user C 108c can be working on an asset in workspace B 106b for which the complete asset can be used as context. User C 108c can be updated with the complete asset. For example, if user C 108c was using a previous version of the complete asset on local storage, the previous version of the complete asset can be updated to be a copy of the complete asset in repository 102. In some instances, a notification can be generated to inform user C 108c of an update to an asset that user C 108c is using.

In example embodiments, progress of a project can be tracked using separate and temporary workspaces generated for the project. For example, for a project stored in repository 102, the assets in workspace A 106a and workspace B 106b can be identified as the assets of the project that are in progress. In some instances, the progress of the project can be determined based on a schedule by which assets are to be completed. By identifying which assets are being modified in separate and temporary workspaces, the progress of the project with respect to schedule can be determined. In some instances, the progress of the project can be determined based on a total number of assets to be completed, a total number of assets that have been completed, and a total number of assets being modified in separate and temporary workspaces.

As an example of the present disclosure, the example system 100 of Fig. 1A may be utilized in the development of a 3D model. In this example, user A 108a and user C 108c can be artists tasked with creating textures for the 3D model. User B 108b can be a producer tasked with reviewing the textures created by user A 108a and user C 108c. In a first example workflow, user B 108B can assign a first texture to user A 108a for creation and modification. Workspace A 106a can be generated for creation and modification of the first texture. An invitation can be generated for user A 108a to work on the first texture in workspace A 106a. Workspace A 106a can be mapped to local storage of user A 108a, allowing user A 108a to seamlessly work seamlessly using local tools while the local storage and workspace A 106a are synchronized. In this first example workflow, as user A 108a saves changes to the first texture on the local storage, the changes are synchronized with the first texture stored on workspace A 106a. User B 108b can be notified of the changes, allowing user B 108b to review the changes, for example, through a web interface. User B 108b can review the changes using build automation 104 and provide comments that are sent as notifications to user A 108a. Through multiple iterations of changes, review, and comments, user A 108a can complete the first texture to the satisfaction of user B 108b. At this point, user B 108b can confirm the first texture is complete and push the first texture to repository 102.

In a second example workflow, user B 108b can assign a second texture to user C 108c for creation and modification. Workspace B 106b can be generated for creation and modification of the second texture. User C 108c can make changes to the second texture using workspace B 106b as user A 108a makes changes to the first texture using workspace A 106a. In the second example workflow, user B 108b can preview the second texture as it would appear on the 3D model along with other complete assets for the 3D model. User B 108b can, for example through a web interface, preview the second texture on the 3D model using build automation 104. In this example, the first texture can be pushed to repository 102 as a complete asset. Therefore, the preview of the second texture on the 3D model with other complete assets for the 3D model would include the first texture. User B 108b can use the preview as context for making changes to the second texture. Likewise, user B 108b can review the changes using build automation 104. Once user B 108b is satisfied with the second texture, user B 108b can push the second texture to repository 102 as a complete asset.

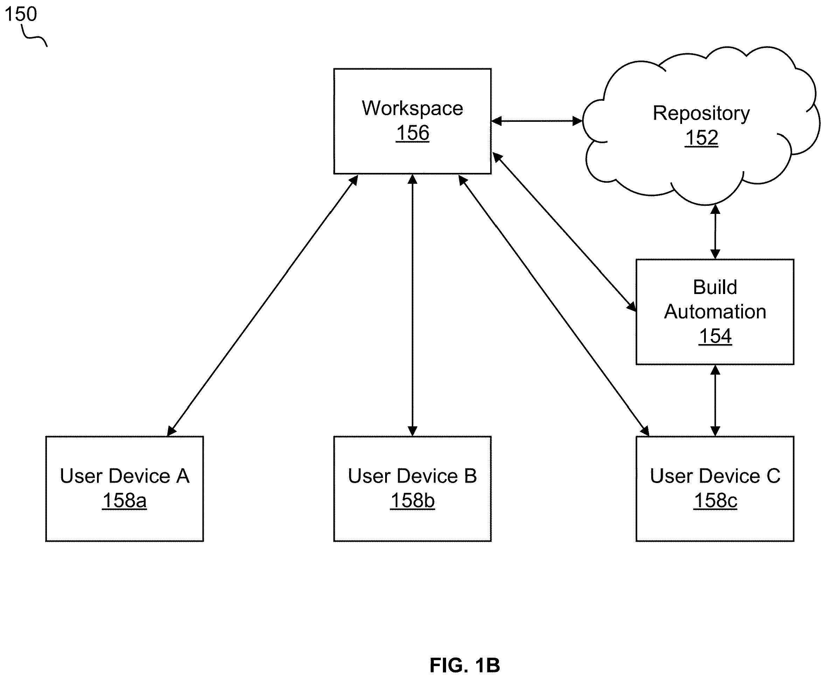

Fig. 1B is a diagram of an example system 150 configured to facilitate creation, modification, rendering, reviewing, and approving of binary assets (e.g., textures, images, meshes, animations, audio, project scenes, rigging, shaders) for a first user (e.g., artist) utilizing user device A 158a and user device B 158b and a second user (e.g., producer) utilizing user device C 158c. In this example, the example system 150 includes a repository 152, a build automation 154, and a workspace 156. The various components and operations described with respect to Fig. 1B are non-limiting examples and many variations are possible. For example, a system consistent with the present disclosure can include more or fewer repositories, build automations, workspaces, and users.

In example embodiments, a user can access a workspace from different devices. For example, workspace 156 can be generated in response to a request (e.g., from the first user, from the second user) for the first user to create or modify an asset of a project stored in repository 152. Upon generation of workspace 156, the first user can be provided with access to workspace 156. Providing the first user with access to workspace 156 can include mapping workspace 156 to local storage of user device A 158a and local storage of user device B 158b, which are both devices utilized by the first user. By mapping workspace 156 to the local storage of user device A 158a and the local storage of user device B 158b, workspace 156 can appear as a folder on user device A 158a and a folder on user device B 158b. The folder on user device A 158a and the folder on user device B 158b can be synchronized with workspace 156 such that modifications made to the asset using user device A 158a is reflected in workspace 156 and user device B 158b and modifications made to the asset using user device B 158b is reflected in workspace 156 and user device A 158a.

As illustrated in the above example, a user can work on an asset in a workspace from different devices. This advantageously facilitates a flexible workflow where, for example, a user can work on an asset at home and continue work on the asset in an office. Furthermore, different tools (e.g., Maya, Blender, Substance, Photoshop) and different platforms (e.g., web, mobile, Windows, macOS, console, webGL) can be supported by the workspace, allowing for improved flexibility.

In example embodiments, when a user makes changes to an asset to a workspace from a device, the changes can be reviewed, rejected, and confirmed. For example, the second user, utilizing user device C 158c, can review a change to the asset in workspace 156 made by the first user. In this example, the first user can make changes to the asset using either user device A 158a or user device B 158b. The changes can be reviewed, for example, using build automation 154 to generate a build based on the asset using a selected or predetermined renderer for a selected or predetermined platform. The second user can access the build with user device C 158c through, for example, a web interface or a separate application. The second user can review the asset, suggest further changes to the asset, and approve the asset (e.g., confirm the asset as complete). Upon approval of the asset, the asset can be checked in to repository 152 and workspace 156 can be deleted. As illustrated in this example, different users can use different tools and different platforms to create or modify an asset. Through a build automation, a consistent build can be provided that avoids potential variations caused by the use of different tools and different platforms.

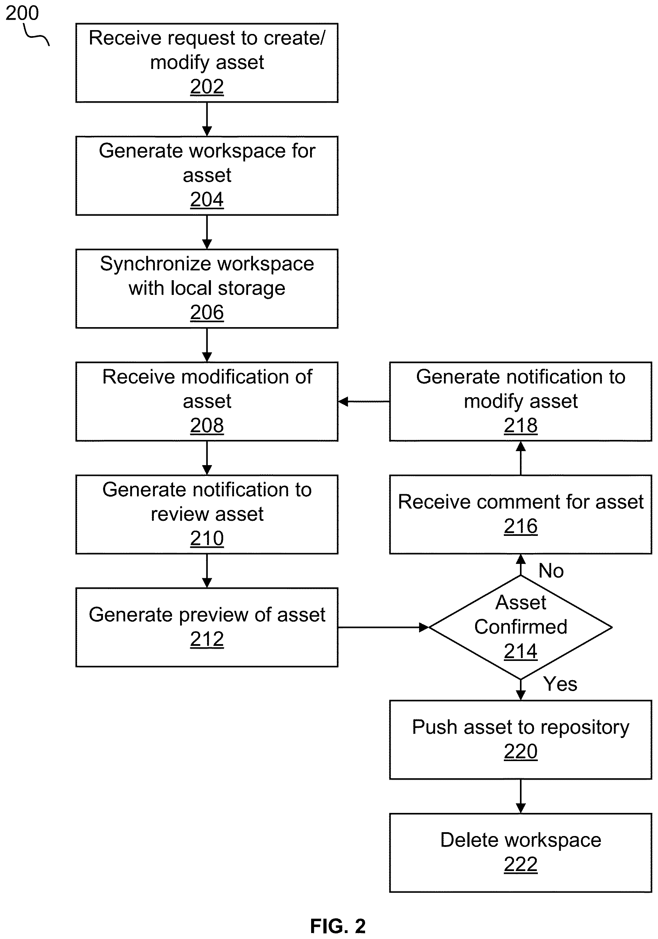

Fig. 2 is a flow chart 200 of example operations performed by a system for creating, modifying, and rendering an asset. In example embodiments, one or more of the example operations are embodied as one or more instructions performed by one or more computer processors. The example operations of flow chart 200 are illustrative and the system can perform additional operations or fewer operations. The example operations can be performed in parallel or in series in various orders of operation.

At operation 202, a request to create or modify an asset is received. For example, a first user can provide a pull request for the asset.

At operation 204, a workspace for the asset is generated. For example, the workspace can be separate from a repository storing assets for a project.

At operation 206, the workspace is synchronized with local storage. For example, the workspace can be synchronized with local storage of a computer of the first user. The workspace can be synchronized to a folder on the local storage of the computer.

At operation 208, a modification of the asset is received. For example, the user can make a modification to the asset and save the asset to the folder on the local storage of the computer. Because the folder is synchronized with the workspace, the modification saved on the local storage is provided to the workspace as a modification of the asset on the workspace.

At operation 210, a notification to review the asset is generated. For example, a notification can be generated for a second user to review the modification of the asset by the first user.

At operation 212, a preview of the asset is generated. For example, the second user can request the asset be rendered for a selected platform. The preview of the asset can be generated based on the selected platform.

At operation 214, the asset can be confirmed as complete or rejected as incomplete. For example, the second user can provide an input that indicates the asset is complete or incomplete.

If the asset is rejected as incomplete, then at operation 216, a comment for the asset is received. For example, the second user can provide a comment describing further modifications to make to the asset.

At operation 218, a notification to modify the asset is generated. For example, a notification including the comments by the second user can be generated and provided to the first user.

If the asset is confirmed as complete, then at operation 220, the asset is pushed to a repository. For example, the asset can be pushed to the repository storing the assets for the project.

At operation 222, the workspace is deleted. For example, any incomplete versions of the asset that were stored on the workspace can be deleted with the workspace.

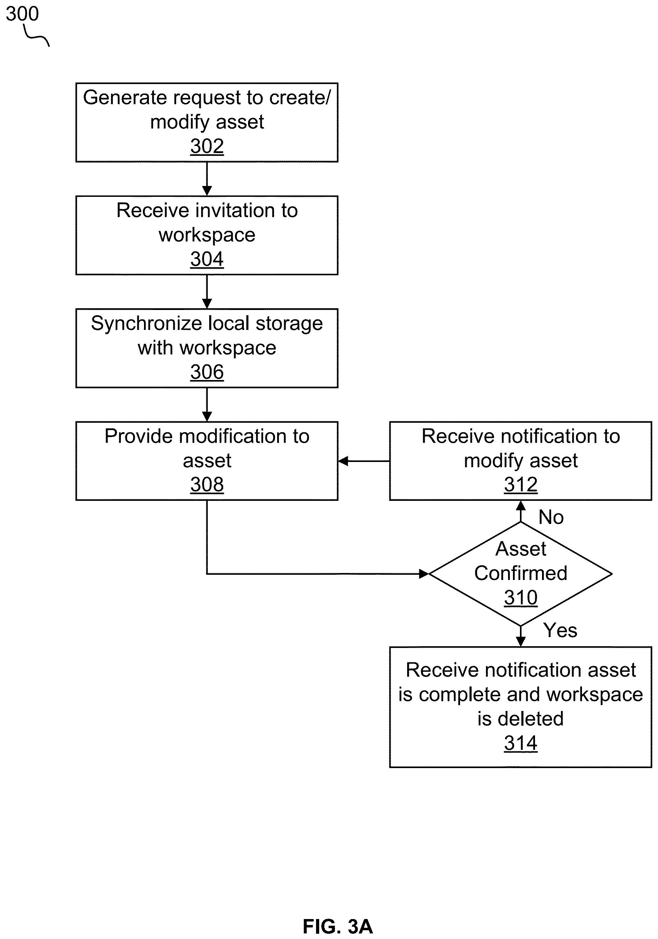

Fig. 3A is a flow chart 300 of example operations performed by a user device for creating, modifying, and rendering an asset. In example embodiments, one or more of the example operations are embodied as one or more instructions performed by one or more computer processors. The example operations of flow chart 300 are illustrative and the user device can perform additional operations or fewer operations. The example operations can be performed in parallel or in series in various orders of operation.

At operation 302, a request to create or modify an asset is generated. For example, a first user can provide a pull request for the asset.

At operation 304, an invitation to a workspace is received. For example, the invitation can indicate that a workspace has been generated for creation and modification of the asset. The invitation can include instructions for synchronizing local storage with the workspace.

At operation 306, local storage is synchronized with the workspace. For example, a folder on local storage can be mapped to the workspace such that data in the folder is synchronized with data on the workspace.

At operation 308, a modification to the asset is provided. For example, the first user can modify the asset and save the asset in the folder on local storage. Because the folder on local storage is synchronized with the workspace, the modification to the asset is provided to the workspace.

At operation 310, the asset is reviewed and confirmed as complete or rejected as incomplete. For example, a second user can receive a notification that the asset has been modified and review the asset. The second user can indicate the asset is complete or incomplete.

If the asset is rejected as incomplete, then at operation 312, a notification to modify the asset is received. For example, the first user can receive a notification with a comment from the second user describing further modifications to make to the asset.

If the asset is confirmed as complete, then at operation 314, a notification that the asset is complete and the workspace is deleted can be received. For example, the first user can receive a notification that the asset has been pushed to a repository and that previous versions of the asset will no longer be accessible.

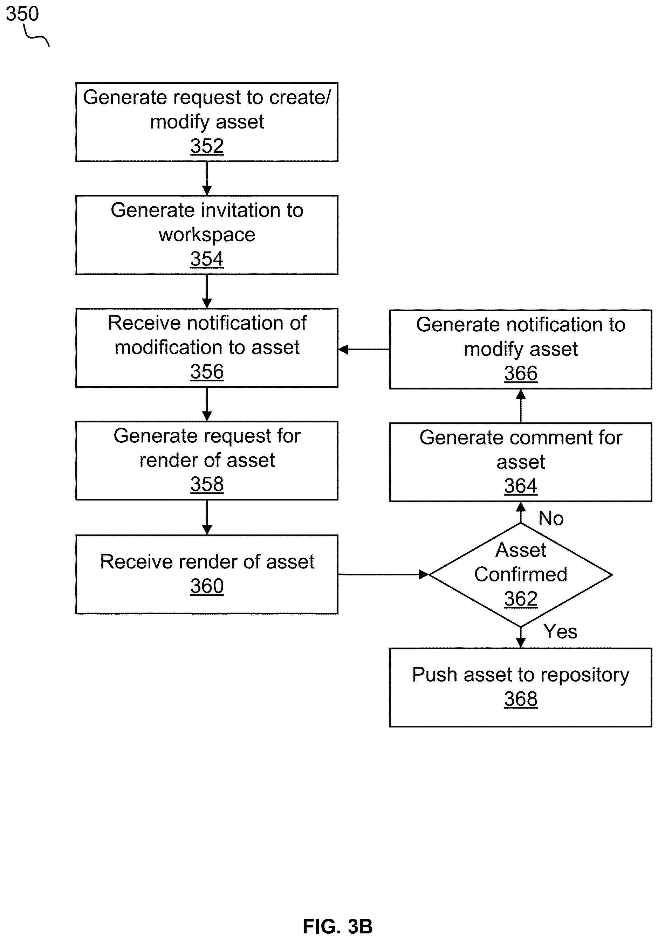

Fig. 3B is a flow chart 350 of example operations performed by a user device for creating, modifying, and rendering an asset. In example embodiments, one or more of the example operations are embodied as one or more instructions performed by one or more computer processors. The example operations of flow chart 350 are illustrative and the user device can perform additional operations or fewer operations. The example operations can be performed in parallel or in series in various orders of operation.

At operation 352, a request to create or modify an asset can be generated. For example, a first user can assign an asset for a second user to create and modify. A workspace for the second user to create and modify the asset can be generated based on the request.

At operation 354, an invitation to the workspace can be generated. For example, the first user can invite the second user to join the workspace. The first user can create and modify the asset on the workspace.

At operation 356, a notification of a modification to the asset can be received. For example, the first user can receive a notification that the second user has modified the asset on the workspace.

At operation 358, a request for a render of the asset can be generated. For example, the first user can request the asset be rendered with a selected tool or on a selected platform.

At operation 360, a render of the asset can be received. For example, the first user can receive the asset rendered based on the selected tool or the selected platform. The first user can compare the asset with renders of previous versions of the asset to identify changes between the different versions of the asset.

At operation 362, the asset can be confirmed as complete or rejected as incomplete. For example, the first user can indicate the asset is complete or the asset is incomplete.

If the asset is rejected as incomplete, then at operation 364, a comment for the asset is generated. For example, the first user can provide comments for further modifications to the asset.

At operation 366, a notification to modify the asset can be generated. For example, a notification including comments provided by the first user can be generated and provided to the second user.

If the asset is confirmed as complete, then at operation 368, the asset is pushed to a repository. For example, the asset can be pushed to a repository for a project for which the asset was created and modified.

While illustrated in the block diagrams as groups of discrete components communicating with each other via distinct data signal connections, it will be understood by those skilled in the art that the various embodiments may be provided by a combination of hardware and software components, with some components being implemented by a given function or operation of a hardware or software system, and many of the data paths illustrated being implemented by data communication within a computer application or operating system. The structure illustrated is thus provided for efficiency of teaching the present various embodiments.

It should be noted that the present disclosure can be carried out as a method, can be embodied in a system, a computer readable medium or an electrical or electro-magnetic signal. The embodiments described above and illustrated in the accompanying drawings are intended to be exemplary only. It will be evident to those skilled in the art that modifications may be made without departing from this disclosure. Such modifications are considered as possible variants and lie within the scope of the disclosure.

Certain embodiments are described herein as including logic or a number of components, modules, or mechanisms. Modules may constitute either software modules (e.g., code embodied on a machine-readable medium or in a transmission signal) or hardware modules. A "hardware module" is a tangible unit capable of performing certain operations and may be configured or arranged in a certain physical manner. In various example embodiments, one or more computer systems (e.g., a standalone computer system, a client computer system, or a server computer system) or one or more hardware modules of a computer system (e.g., a processor or a group of processors) may be configured by software (e.g., an application or application portion) as a hardware module that operates to perform certain operations as described herein.

In some embodiments, a hardware module may be implemented mechanically, electronically, or with any suitable combination thereof. For example, a hardware module may include dedicated circuitry or logic that is permanently configured to perform certain operations. For example, a hardware module may be a special-purpose processor, such as a field-programmable gate array (FPGA) or an Application Specific Integrated Circuit (ASIC). A hardware module may also include programmable logic or circuitry that is temporarily configured by software to perform certain operations. For example, a hardware module may include software encompassed within a general-purpose processor or other programmable processor. Such software may at least temporarily transform the general-purpose processor into a special-purpose processor. It will be appreciated that the decision to implement a hardware module mechanically, in dedicated and permanently configured circuitry, or in temporarily configured circuitry (e.g., configured by software) may be driven by cost and time considerations.

Accordingly, the phrase "hardware module" should be understood to encompass a tangible entity, be that an entity that is physically constructed, permanently configured (e.g., hardwired), or temporarily configured (e.g., programmed) to operate in a certain manner or to perform certain operations described herein. As used herein, "hardware-implemented module" refers to a hardware module. Considering embodiments in which hardware modules are temporarily configured (e.g., programmed), each of the hardware modules need not be configured or instantiated at any one instance in time. For example, where a hardware module comprises a general-purpose processor configured by software to become a special-purpose processor, the general-purpose processor may be configured as respectively different special-purpose processors (e.g., comprising different hardware modules) at different times. Software may accordingly configure a particular processor or processors, for example, to constitute a particular hardware module at one instance of time and to constitute a different hardware module at a different instance of time.

Hardware modules can provide information to, and receive information from, other hardware modules. Accordingly, the described hardware modules may be regarded as being communicatively coupled. Where multiple hardware modules exist contemporaneously, communications may be achieved through signal transmission (e.g., over appropriate circuits and buses) between or among two or more of the hardware modules. In embodiments in which multiple hardware modules are configured or instantiated at different times, communications between such hardware modules may be achieved, for example, through the storage and retrieval of information in memory structures to which the multiple hardware modules have access. For example, one hardware module may perform an operation and store the output of that operation in a memory device to which it is communicatively coupled. A further hardware module may then, at a later time, access the memory device to retrieve and process the stored output. Hardware modules may also initiate communications with input or output devices, and can operate on a resource (e.g., a collection of information).

The various operations of example methods described herein may be performed, at least partially, by one or more processors that are temporarily configured (e.g., by software) or permanently configured to perform the relevant operations. Whether temporarily or permanently configured, such processors may constitute processor-implemented modules that operate to perform one or more operations or functions described herein. As used herein, "processor-implemented module" refers to a hardware module implemented using one or more processors.

Similarly, the methods described herein may be at least partially processor-implemented, with a particular processor or processors being an example of hardware. For example, at least some of the operations of a method may be performed by one or more processors or processor-implemented modules. Moreover, the one or more processors may also operate to support performance of the relevant operations in a "cloud computing" environment or as a "software as a service" (SaaS). For example, at least some of the operations may be performed by a group of computers (as examples of machines including processors), with these operations being accessible via a network (e.g., the Internet) and via one or more appropriate interfaces (e.g., an application program interface (API)).

The performance of certain of the operations may be distributed among the processors, not only residing within a single machine, but deployed across a number of machines. In some example embodiments, the processors or processor-implemented modules may be located in a single geographic location (e.g., within a home environment, an office environment, or a server farm). In other example embodiments, the processors or processor-implemented modules may be distributed across a number of geographic locations.

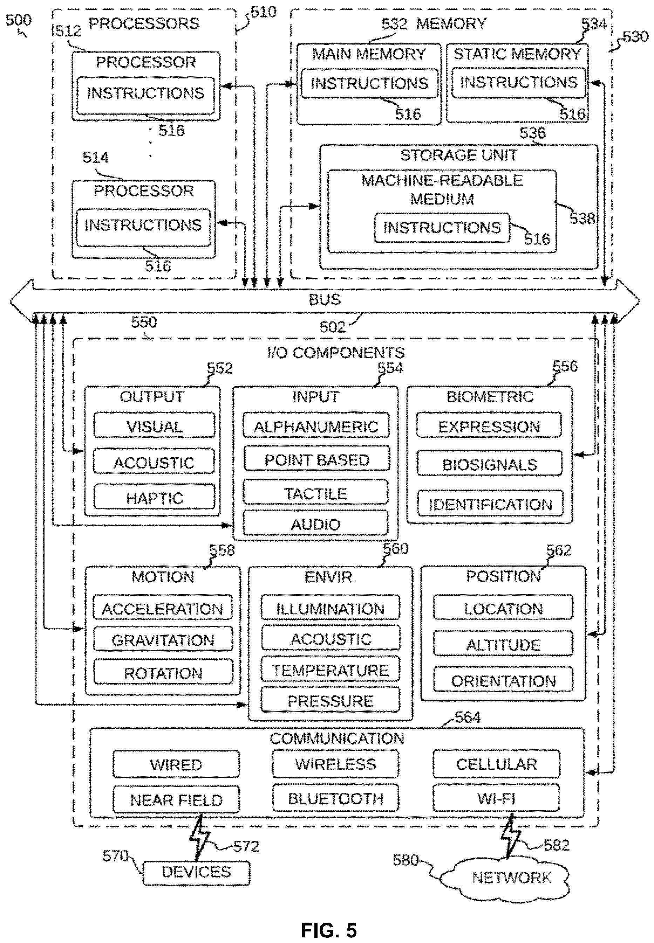

Fig. 5 is a block diagram 500 illustrating an example software architecture 502, which may be used in conjunction with various hardware architectures herein described to provide a gaming engine 501 and/or components of the rendering engine. Fig. 5 is a non-limiting example of a software architecture and it will be appreciated that many other architectures may be implemented to facilitate the functionality described herein. The software architecture 502 may execute on hardware such as a machine 600 of Fig. 6 that includes, among other things, processors 610, memory 630, and input/output (I/O) components 1050. A representative hardware layer 504 is illustrated and can represent, for example, the machine 600 of Fig. 6. The representative hardware layer 504 includes a processing unit 506 having associated executable instructions 508. The executable instructions 508 represent the executable instructions of the software architecture 502, including implementation of the methods, modules and so forth described herein. The hardware layer 504 also includes memory/storage 510, which also includes the executable instructions 508. The hardware layer 504 may also comprise other hardware 512.

In the example architecture of Fig. 5, the software architecture 502 may be conceptualized as a stack of layers where each layer provides particular functionality. For example, the software architecture 502 may include layers such as an operating system 514, libraries 516, frameworks or middleware 518, applications 520 and a presentation layer 544. Operationally, the applications 520 and/or other components within the layers may invoke application programming interface (API) calls 524 through the software stack and receive a response as messages 526. The layers illustrated are representative in nature and not all software architectures have all layers. For example, some mobile or special purpose operating systems may not provide the frameworks/middleware 518, while others may provide such a layer. Other software architectures may include additional or different layers.

The operating system 514 may manage hardware resources and provide common services. The operating system 514 may include, for example, a kernel 528, services 530, and drivers 532. The kernel 528 may act as an abstraction layer between the hardware and the other software layers. For example, the kernel 528 may be responsible for memory management, processor management (e.g., scheduling), component management, networking, security settings, and so on. The services 530 may provide other common services for the other software layers. The drivers 532 may be responsible for controlling or interfacing with the underlying hardware. For instance, the drivers 532 may include display drivers, camera drivers, Bluetooth^{®} drivers, flash memory drivers, serial communication drivers (e.g., Universal Serial Bus (USB) drivers), Wi-Fi^{®} drivers, audio drivers, power management drivers, and so forth depending on the hardware configuration.

The libraries 516 may provide a common infrastructure that may be used by the applications 520 and/or other components and/or layers. The libraries 516 typically provide functionality that allows other software modules to perform tasks in an easier fashion than to interface directly with the underlying operating system 514 functionality (e.g., kernel 528, services 530 and/or drivers 532). The libraries 616 may include system libraries 534 (e.g., C standard library) that may provide functions such as memory allocation functions, string manipulation functions, mathematic functions, and the like. In addition, the libraries 516 may include API libraries 536 such as media libraries (e.g., libraries to support presentation and manipulation of various media format such as MPEG4, H.264, MP3, AAC, AMR, JPG, PNG), graphics libraries (e.g., an OpenGL framework that may be used to render 2D and 3D graphic content on a display), database libraries (e.g., SQLite that may provide various relational database functions), web libraries (e.g., WebKit that may provide web browsing functionality), and the like. The libraries 516 may also include a wide variety of other libraries 538 to provide many other APIs to the applications 520 and other software components/modules.

The frameworks 518 (also sometimes referred to as middleware) provide a higher-level common infrastructure that may be used by the applications 520 and/or other software components/modules. For example, the frameworks/middleware 518 may provide various graphic user interface (GUI) functions, high-level resource management, high-level location services, and so forth. The frameworks/middleware 518 may provide a broad spectrum of other APIs that may be utilized by the applications 520 and/or other software components/modules, some of which may be specific to a particular operating system or platform.

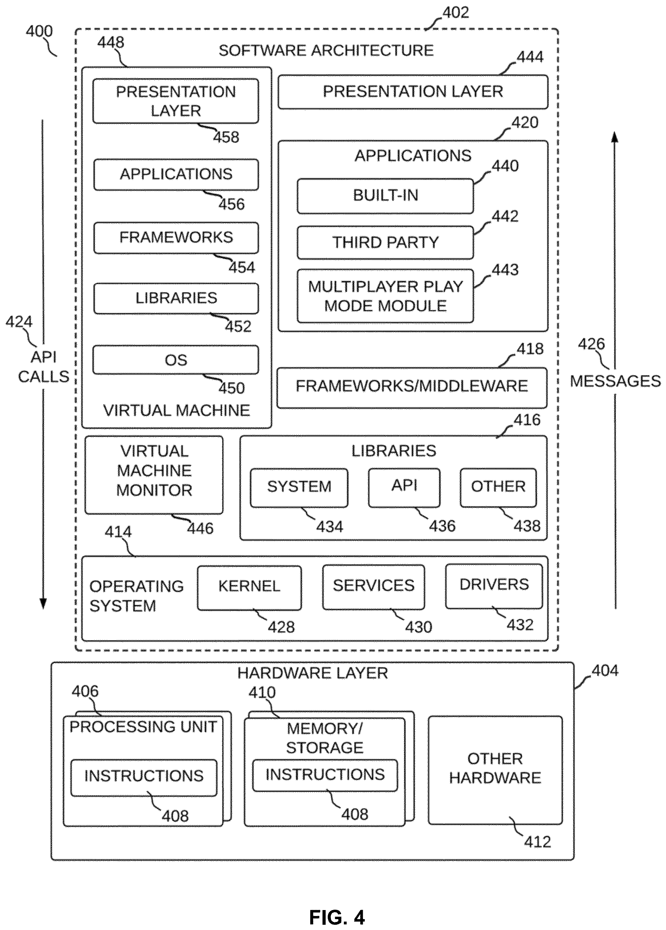

The applications 520 include built-in applications 540 and/or third-party applications 542. Examples of representative built-in applications 540 may include, but are not limited to, a contacts application, a browser application, a book reader application, a location application, a media application, a messaging application, and/or a game application. Third-party applications 542 may include any an application developed using the Android^{™} or iOS^{™} software development kit (SDK) by an entity other than the vendor of the particular platform, and may be mobile software running on a mobile operating system such as iOS^{™}, Android^{™}, Windows^{®} Phone, or other mobile operating systems. The third-party applications 542 may invoke the API calls 524 provided by the mobile operating system such as operating system 514 to facilitate functionality described herein. In example embodiments, the applications 520 may include a rendering module 543. In example embodiments, any of the operations described herein, such as the operations described with respect to Figs. 1-4, may be implemented by the rendering module 543.

The applications 520 may use built-in operating system functions (e.g., kernel 528, services 530 and/or drivers 532), libraries 516, or frameworks/middleware 518 to create user interfaces to interact with users of the system. Alternatively, or additionally, in some systems, interactions with a user may occur through a presentation layer, such as the presentation layer 544. In these systems, the application/module "logic" can be separated from the aspects of the application/module that interact with a user.

Some software architectures use virtual machines. In the example of Fig. 5, this is illustrated by a virtual machine 548. The virtual machine 548 creates a software environment where applications/modules can execute as if they were executing on a hardware machine (such as the machine 600 of Fig. 6, for example). The virtual machine 548 is hosted by a host operating system (e.g., operating system 514) and typically, although not always, has a virtual machine monitor 546, which manages the operation of the virtual machine 548 as well as the interface with the host operating system (i.e., operating system 514). A software architecture executes within the virtual machine 548 such as an operating system (OS) 550, libraries 552, frameworks 554, applications 556, and/or a presentation layer 558. These layers of software architecture executing within the virtual machine 548 can be the same as corresponding layers previously described or may be different.

Fig. 6 is a block diagram illustrating components of a machine 600, according to some example embodiments, configured to read instructions from a machine-readable medium (e.g., a machine-readable storage medium) and perform any one or more of the methodologies discussed herein. Specifically, Fig. 6 shows a diagrammatic representation of the machine 600 in the example form of a computer system, within which instructions 616 (e.g., software, a program, an application, an applet, an app, or other executable code) for causing the machine 600 to perform any one or more of the methodologies discussed herein may be executed. As such, the instructions 616 may be used to implement modules or components described herein. The instructions transform the general, non-programmed machine into a particular machine programmed to carry out the described and illustrated functions in the manner described. In alternative embodiments, the machine 600 operates as a standalone device or may be coupled (e.g., networked) to other machines. In a networked deployment, the machine 600 may operate in the capacity of a server machine or a client machine in a server-client network environment, or as a peer machine in a peer-to-peer (or distributed) network environment. The machine 600 may comprise, but not be limited to, a server computer, a client computer, a personal computer (PC), a tablet computer, a laptop computer, a netbook, a set-top box (STB), a personal digital assistant (PDA), an entertainment media system, a cellular telephone, a smart phone, a mobile device, a wearable device (e.g., a smart watch), a smart home device (e.g., a smart appliance), other smart devices, a web appliance, a network router, a network switch, a network bridge, or any machine capable of executing the instructions 616, sequentially or otherwise, that specify actions to be taken by the machine 600. Further, while only a single machine 600 is illustrated, the term "machine" shall also be taken to include a collection of machines that individually or jointly execute the instructions 616 to perform any one or more of the methodologies discussed herein.

The machine 600 may include processors 610, memory 630, and input/output (I/O) components 650, which may be configured to communicate with each other such as via a bus 602. In an example embodiment, the processors 610 (e.g., a Central Processing Unit (CPU), a Reduced Instruction Set Computing (RISC) processor, a Complex Instruction Set Computing (CISC) processor, a Graphics Processing Unit (GPU), a Digital Signal Processor (DSP), an Application Specific Integrated Circuit (ASIC), a Radio-Frequency Integrated Circuit (RFIC), another processor, or any suitable combination thereof) may include, for example, a processor 612 and a processor 614 that may execute the instructions 616. The term "processor" is intended to include multi-core processor that may comprise two or more independent processors (sometimes referred to as "cores") that may execute instructions contemporaneously. Although Fig. 6 shows multiple processors, the machine 600 may include a single processor with a single core, a single processor with multiple cores (e.g., a multi-core processor), multiple processors with a single core, multiple processors with multiples cores, or any combination thereof.

The memory/storage 630 may include a memory, such as a main memory 632, a static memory 634, or other memory, and a storage unit 636, both accessible to the processors 610 such as via the bus 602. The storage unit 636 and memory 632, 634 store the instructions 616 embodying any one or more of the methodologies or functions described herein. The instructions 616 may also reside, completely or partially, within the memory 632, 634, within the storage unit 636, within at least one of the processors 610 (e.g., within the processor's cache memory), or any suitable combination thereof, during execution thereof by the machine 600. Accordingly, the memory 632, 634, the storage unit 636, and the memory of processors 610 are examples of machine-readable media 638.

As used herein, "machine-readable medium" means a device able to store instructions and data temporarily or permanently and may include, but is not limited to, random-access memory (RAM), read-only memory (ROM), buffer memory, flash memory, optical media, magnetic media, cache memory, other types of storage (e.g., Erasable Programmable Read-Only Memory (EEPROM)) and/or any suitable combination thereof. The term "machine-readable medium" should be taken to include a single medium or multiple media (e.g., a centralized or distributed database, or associated caches and servers) able to store the instructions 616. The term "machine-readable medium" shall also be taken to include any medium, or combination of multiple media, that is capable of storing instructions (e.g., instructions 616) for execution by a machine (e.g., machine 600), such that the instructions, when executed by one or more processors of the machine 600 (e.g., processors 610), cause the machine 600 to perform any one or more of the methodologies or operations, including non-routine or unconventional methodologies or operations, or non-routine or unconventional combinations of methodologies or operations, described herein. Accordingly, a "machine-readable medium" refers to a single storage apparatus or device, as well as "cloud-based" storage systems or storage networks that include multiple storage apparatus or devices. The term "machine-readable medium" excludes signals per se.

The input/output (I/O) components 650 may include a wide variety of components to receive input, provide output, produce output, transmit information, exchange information, capture measurements, and so on. The specific input/output (I/O) components 650 that are included in a particular machine will depend on the type of machine. For example, portable machines such as mobile phones will likely include a touch input device or other such input mechanisms, while a headless server machine will likely not include such a touch input device. It will be appreciated that the input/output (I/O) components 650 may include many other components that are not shown in Fig. 6. The input/output (I/O) components 650 are grouped according to functionality merely for simplifying the following discussion and the grouping is in no way limiting. In various example embodiments, the input/output (I/O) components 650 may include output components 652 and input components 654. The output components 652 may include visual components (e.g., a display such as a plasma display panel (PDP), a light emitting diode (LED) display, a liquid crystal display (LCD), a projector, or a cathode ray tube (CRT)), acoustic components (e.g., speakers), haptic components (e.g., a vibratory motor, resistance mechanisms), other signal generators, and so forth. The input components 654 may include alphanumeric input components (e.g., a keyboard, a touch screen configured to receive alphanumeric input, a photo-optical keyboard, or other alphanumeric input components), point based input components (e.g., a mouse, a touchpad, a trackball, a joystick, a motion sensor, or another pointing instrument), tactile input components (e.g., a physical button, a touch screen that provides location and/or force of touches or touch gestures, or other tactile input components), audio input components (e.g., a microphone), and the like.

In further example embodiments, the input/output (I/O) components 650 may include biometric components 656, motion components 658, environmental components 660, or position components 662, among a wide array of other components. For example, the biometric components 656 may include components to detect expressions (e.g., hand expressions, facial expressions, vocal expressions, body gestures, or eye tracking), measure biosignals (e.g., blood pressure, heart rate, body temperature, perspiration, or brain waves), identify a person (e.g., voice identification, retinal identification, facial identification, fingerprint identification, or electroencephalogram based identification), and the like. The motion components 658 may include acceleration sensor components (e.g., accelerometer), gravitation sensor components, rotation sensor components (e.g., gyroscope), and so forth. The environmental components 660 may include, for example, illumination sensor components (e.g., photometer), temperature sensor components (e.g., one or more thermometers that detect ambient temperature), humidity sensor components, pressure sensor components (e.g., barometer), acoustic sensor components (e.g., one or more microphones that detect background noise), proximity sensor components (e.g., infrared sensors that detect nearby objects), gas sensors (e.g., gas detection sensors to detection concentrations of hazardous gases for safety or to measure pollutants in the atmosphere), or other components that may provide indications, measurements, or signals corresponding to a surrounding physical environment. The position components 662 may include location sensor components (e.g., a Global Position System (GPS) receiver component), altitude sensor components (e.g., altimeters or barometers that detect air pressure from which altitude may be derived), orientation sensor components (e.g., magnetometers), and the like.

Communication may be implemented using a wide variety of technologies. The input/output (I/O) components 650 may include communication components 664 operable to couple the machine 600 to a network 680 or devices 670 via a coupling 682 and a coupling 672 respectively. For example, the communication components 664 may include a network interface component or other suitable device to interface with the network 680. In further examples, the communication components 664 may include wired communication components, wireless communication components, cellular communication components, Near Field Communication (NFC) components, Bluetooth^{®} components (e.g., Bluetooth^{®} Low Energy), Wi-Fi^{®} components, and other communication components to provide communication via other modalities. The devices 670 may be another machine or any of a wide variety of peripheral devices (e.g., a peripheral device coupled via a Universal Serial Bus (USB)).

Moreover, the communication components 664 may detect identifiers or include components operable to detect identifiers. For example, the communication components 664 may include Radio Frequency Identification (RFID) tag reader components, NFC smart tag detection components, optical reader components (e.g., an optical sensor to detect one-dimensional bar codes such as Universal Product Code (UPC) bar code, multidimensional bar codes such as Quick Response (QR) code, Aztec code, Data Matrix, Dataglyph, MaxiCode, PDF417, Ultra Code, UCC RSS-2D bar code, and other optical codes), or acoustic detection components (e.g., microphones to identify tagged audio signals). In addition, a variety of information may be derived via the communication components 662, such as, location via Internet Protocol (IP) geo-location, location via Wi-Fi^{®} signal triangulation, location via detecting a NFC beacon signal that may indicate a particular location, and so forth.

Throughout this specification, plural instances may implement components, operations, or structures described as a single instance. Although individual operations of one or more methods are illustrated and described as separate operations, one or more of the individual operations may be performed concurrently, and nothing requires that the operations be performed in the order illustrated. Structures and functionality presented as separate components in example configurations may be implemented as a combined structure or component. Similarly, structures and functionality presented as a single component may be implemented as separate components. These and other variations, modifications, additions, and improvements fall within the scope of the subject matter herein.

The embodiments illustrated herein are described in sufficient detail to enable those skilled in the art to practice the teachings disclosed. Other embodiments may be used and derived therefrom, such that structural and logical substitutions and changes may be made without departing from the scope of this disclosure. The Detailed Description, therefore, is not to be taken in a limiting sense, and the scope of various embodiments is defined only by the appended claims.

The term 'content' used throughout the description herein should be understood to include all forms of media content items, including images, videos, audio, text, 3D models (e.g., including textures, materials, meshes, and more), animations, vector graphics, and the like.

The term 'game' used throughout the description herein should be understood to include video games and applications that execute and present video games on a device, and applications that execute and present simulations on a device. The term 'game' should also be understood to include programming code (either source code or executable binary code) which is used to create and execute the game on a device.

The term 'environment' used throughout the description herein should be understood to include 2D digital environments (e.g., 2D video game environments, 2D simulation environments, 2D content creation environments, and the like), 3D digital environments (e.g., 3D game environments, 3D simulation environments, 3D content creation environments, virtual reality environments, and the like), and augmented reality environments that include both a digital (e.g., virtual) component and a real-world component.

The term 'digital object', used throughout the description herein is understood to include any object of digital nature, digital structure or digital element within an environment. A digital object can represent (e.g., in a corresponding data structure) almost anything within the environment; including 3D models (e.g., characters, weapons, scene elements (e.g., buildings, trees, cars, treasures, and the like)) with 3D model textures, backgrounds (e.g., terrain, sky, and the like), lights, cameras, effects (e.g., sound and visual), animation, and more. The term 'digital object' may also be understood to include linked groups of individual digital objects. A digital object is associated with data that describes properties and behavior for the object.

The terms 'asset', 'game asset', and 'digital asset', used throughout the description herein are understood to include any data that can be used to describe a digital object or can be used to describe an aspect of a digital project (e.g., including: a game, a film, a software application). For example, an asset can include data for an image, a 3D model (textures, rigging, and the like), a group of 3D models (e.g., an entire scene), an audio sound, a video, animation, a 3D mesh and the like. The data describing an asset may be stored within a file, or may be contained within a collection of files, or may be compressed and stored in one file (e.g., a compressed file), or may be stored within a memory. The data describing an asset can be used to instantiate one or more digital objects within a game at runtime (e.g., during execution of the game).

As used herein, the term "or" may be construed in either an inclusive or exclusive sense. Moreover, plural instances may be provided for resources, operations, or structures described herein as a single instance. Additionally, boundaries between various resources, operations, modules, engines, and data stores are somewhat arbitrary, and particular operations are illustrated in a context of specific illustrative configurations. Other allocations of functionality are envisioned and may fall within a scope of various embodiments of the present disclosure. In general, structures and functionality presented as separate resources in the example configurations may be implemented as a combined structure or resource. Similarly, structures and functionality presented as a single resource may be implemented as separate resources. These and other variations, modifications, additions, and improvements fall within the scope of embodiments of the present disclosure as represented by the appended claims. The specification and drawings are, accordingly, to be regarded in an illustrative rather than a restrictive sense.

## Claims

1. A computer-readable storage medium storing a set of instructions that, when executed by one or more computer processors, causes the one or more computer processors to perform operations, the operations comprising:
generating a first workspace for a first binary asset;
saving a first version of the first binary asset on the first workspace;
receiving a modification to the first binary asset;
saving a second version of the first binary asset with the modification on the first workspace;
rendering the first version of the first binary asset and the second version of the first binary asset based on a selected platform;
saving the second version of the first binary asset to a repository; and
deleting the first workspace.

2. The computer-readable storage medium of claim 1, the operations further comprising:
providing a first invitation to a first user device to access the first workspace;
synchronizing the first workspace with a first local storage of the first user device, wherein the first workspace appears as a first folder on the first local storage of the first user device, wherein receiving the modification to the first binary asset is based on a saved change to a first locally stored version of the first binary asset on the first local storage of the first user device.

3. The computer-readable storage medium of claim 1 or claim 2, the operations further comprising:
rendering the second version of the first binary asset with a plurality of binary assets on the repository based on the selected platform.

4. The computer-readable storage medium of any one of claims 1 to 3, the operations further comprising:
generating a second workspace for a second binary asset, wherein access to the first workspace for the first binary asset is allowed for a first user device and denied for a second user device, and wherein access to the second workspace for the second binary asset is denied for the first user device and allowed for the second user device.

5. The computer-readable storage medium of any one of claims 1 to 4, the operations further comprising:
providing a progress of a project based on an identification of workspaces generated for binary assets of the project.

6. The computer-readable storage medium of any one of claims 1 to 5, the operations further comprising:
receiving a comment in response to the rendering the first version of the first binary asset and the second version of the first binary asset on the selected platform; and
generating a notification including the comment.

7. The computer-readable storage medium of any one of claims 1 to 6, the operations further comprising:
generating a notification in response to the receiving the modification to the first binary asset.

8. The computer-readable storage medium of any one of claims 1 to 7, the operations further comprising:
maintaining a history of modifications to the first binary asset; and
providing the first version of the first binary asset on the first workspace to a first user device based on a request to undo the modification to the first binary asset.

9. The computer-readable storage medium of any one of claims 1 to 8, wherein rendering the first version of the first binary asset and the second version of the first binary asset comprises:
rendering the second version of the first binary asset using the selected platform for review, wherein the selected platform provides a web interface, and wherein the second version of the first binary asset is checked in to a repository based on an approval of the second version of the first binary asset;
rendering a first preview of the first version of the first binary asset and a second preview of the second version of the first binary asset, wherein the first preview and the second preview are provided for a side-by-side comparison to facilitate an approval of the second version of the first binary asset; or
rendering the second version of the first binary asset using the selected platform for review, wherein the selected platform is a mobile, a windows, a macOS, a console, or a webGL platform, wherein the second version of the first binary asset is rendered in context of a target platform with one or more binary assets stored in a repository, and wherein the second version of the first binary asset is checked in to a repository based on an approval of the second version of the first binary asset.

10. A system comprising:
one or more computer processors;
one or more computer memories;
a set of instructions incorporated into the one or more computer memories, the set of instructions configuring the one or more computer processors to perform operations, the operations comprising:
generating a first workspace for a first binary asset;
saving a first version of the first binary asset on the first workspace;
receiving a modification to the first binary asset;
saving a second version of the first binary asset with the modification on the first workspace;
rendering the first version of the first binary asset and the second version of the first binary asset based on a selected platform;
saving the second version of the first binary asset to a repository; and
deleting the first workspace.

11. The system of claim 10, the operations further comprising:
providing a first invitation to a first user device to access the first workspace;
synchronizing the first workspace with a first local storage of the first user device, wherein the first workspace appears as a first folder on the first local storage of the first user device, wherein receiving the modification to the first binary asset is based on a saved change to a first locally stored version of the first binary asset on the first local storage of the first user device.

12. The system of claim 10 or claim 11, the operations further comprising:
rendering the second version of the first binary asset with a plurality of binary assets on the repository based on the selected platform.

13. The system of any one of claims 10 to 12, the operations further comprising:
generating a second workspace for a second binary asset, wherein access to the first workspace for the first binary asset is allowed for a first user device and denied for a second user device, and wherein access to the second workspace for the second binary asset is denied for the first user device and allowed for the second user device.

14. A method comprising:
generating a first workspace for a first binary asset;
saving a first version of the first binary asset on the first workspace;
receiving a modification to the first binary asset;
saving a second version of the first binary asset with the modification on the first workspace;
rendering the first version of the first binary asset and the second version of the first binary asset based on a selected platform;
saving the second version of the first binary asset to a repository; and
deleting the first workspace.

15. The method of claim 14, further comprising:
providing a first invitation to a first user device to access the first workspace;
synchronizing the first workspace with a first local storage of the first user device, wherein the first workspace appears as a first folder on the first local storage of the first user device, wherein receiving the modification to the first binary asset is based on a saved change to a first locally stored version of the first binary asset on the first local storage of the first user device.
